# EUROPEAN PATENT APPLICATION

(11) **EP 4 848 735 A1**
(43) Date of publication of application: **02.12.2026**
(21) Application number: 24927403.6
(22) Date of filing: 26.02.2024
(51) Int. Cl.: H04N 21/2365, H04N 21/854, H04N 21/218, H04N 23/661, G06T 7/70, G06V 20/40

(54) **AUTOMATIC RELAY METHOD AND ELECTRONIC DEVICE FOR PERFORMING SAME**

(71) Applicant: Pixelscope Inc., Seoul 06236 (KR)
(72) Inventor: KWON, Gee Hwan, Yongin-si, Gyeonggi-do 16822 (KR); KOO, Kyung Mo, Seoul 08603 (KR); YEO, Jae Yun, Yongin-si, Gyeonggi-do 16868 (KR); LEE, Sang Won, Wonju-si, Gangwon-do 26482 (KR)
(74) Representative: Kim Kang, Jae Hee
(86) International application number: PCT/KR2024/002438
(87) International publication number: WO 2025/183230

(57) **Abstract**

Disclosed are a method of automated broadcasting and an electronic device performing the method. An electronic device according to various embodiments may receive, from a plurality of detection cameras, a plurality of first images captured with respect to a filming space, identify a type of at least one object included in the plurality of first images for each set frame, determine, for each set frame, a position of the at least one object in a three-dimensional coordinate system set with respect to the filming space, determine a control signal for generating a broadcast video by inputting the type and position of the at least one object into a trained model, and determine the broadcast video by using at least one second image among a plurality of second images obtained from a plurality of filming cameras, based on the control signal.

## Description

### TECHNICAL FIELD

The following disclosure relates to a method of automated broadcasting and an electronic device performing the method.

### BACKGROUND ART

In order to broadcast a sports game, cameras and equipment for broadcasting are installed, and personnel for operating the cameras and the equipment are deployed.

Since equipment and personnel are deployed for each game, the cost for broadcasting a sports game is high. In addition, when a broadcast video is determined by a human, broadcast quality may depend on the personal judgment, experience, and competence of the operating personnel.

The above-described background art is what the inventors possessed or acquired in the process of deriving the disclosure of the present application, and cannot necessarily be said to be known art disclosed to the general public prior to the filing of the present application.

### DETAILED DESCRIPTION OF THE INVENTION

### TECHNICAL PROBLEM

According to various embodiments, when broadcasting an event such as a sports game or a function, an electronic device may automatically determine and/or generate a broadcast video from among images obtained from a plurality of filming cameras, and transmit the broadcast video.

According to various embodiments, the electronic device may improve quality of the broadcast video by providing analyzed data together with the broadcast video.

According to various embodiments, the electronic device may identify an event that has occurred in a filming space, and determine the broadcast video according to the identified event.

However, the technical problems are not limited to the above-described technical problems, and other technical problems may exist.

### MEANS FOR SOLVING THE PROBLEM

An electronic device according to various embodiments includes at least one processor, and a memory electrically connected to the at least one processor and storing at least one instruction executed by the processor, wherein the processor, when the at least one instruction is executed, may cause the electronic device to: receive, from a plurality of detection cameras, a plurality of first images captured with respect to a filming space; identify a type of at least one object included in the plurality of first images for each set frame; determine, for each set frame, a position of the at least one object in a three-dimensional coordinate system set with respect to the filming space; determine a control signal for generating a broadcast video by inputting the type and position of the at least one object into a trained model; and determine the broadcast video by using at least one second image among a plurality of second images obtained from a plurality of filming cameras, based on the control signal.

The at least one processor may control the plurality of filming cameras based on the control signal.

The at least one processor may determine data regarding the at least one object based on the type and position of the at least one object.

The at least one processor may determine the broadcast video including the data.

The at least one processor may determine a control signal for generating a replay video by inputting the position of the at least one object into the model, and determine the replay video based on a plurality of second images of previous frames obtained from the plurality of filming cameras, according to the control signal for generating the replay video.

The at least one processor may process the broadcast video based on information of a user terminal communicatively connected to the electronic device, and transmit the processed broadcast video to the user terminal.

An electronic device according to various embodiments includes at least one processor, and a memory electrically connected to the at least one processor and storing at least one instruction executed by the processor, wherein the processor, when the at least one instruction is executed, may cause the electronic device to: receive, from a plurality of detection cameras, a plurality of first images captured with respect to a filming space; identify at least one object included in the plurality of first images for each set frame; determine, for each set frame, a position of the at least one object in a three-dimensional coordinate system set with respect to the filming space; identify an event that has occurred in the filming space by inputting the type and position of the at least one object into a trained model; determine, by using the model, a control signal for generating a broadcast video according to the event; and determine the broadcast video by using at least one second image among a plurality of second images obtained from a plurality of filming cameras, based on the control signal.

The at least one processor may determine data regarding the at least one object based on the type and position of the at least one object, and determine the broadcast video including the data based on the event.

A method of automated broadcasting according to various embodiments may include: receiving, from a plurality of detection cameras, a plurality of first images captured with respect to a filming space; identifying at least one object included in the plurality of first images for each set frame; determining, for each set frame, a position of the at least one object in a three-dimensional coordinate system set with respect to the filming space; determining a control signal for generating a broadcast video by inputting the type and position of the at least one object into a trained model; and determining the broadcast video by using at least one second image among a plurality of second images obtained from a plurality of filming cameras, based on the control signal.

The determining of the broadcast video may include controlling the plurality of filming cameras based on the control signal.

The method of automated broadcasting may further include determining data regarding the at least one object based on the type and position of the at least one object.

In the determining of the broadcast video, the broadcast video including the data may be determined.

The determining of the control signal may include determining a control signal for generating a replay video by inputting the type and position of the at least one object into the model, and the determining of the broadcast video may include determining the replay video based on a plurality of second images of previous frames obtained from the plurality of filming cameras, according to the control signal for generating the replay video.

The method of automated broadcasting may further include processing the broadcast video based on information of a user terminal communicatively connected to the electronic device, and transmitting the processed broadcast video to the user terminal.

### ADVANTAGEOUS EFFECTS OF THE INVENTION

A method of automated broadcasting and an electronic device according to various embodiments may reduce cost and/or personnel consumed for broadcasting a sports game (or a function) by determining a broadcast video in real time and transmitting the broadcast video.

A method of automated broadcasting and an electronic device according to various embodiments may improve quality of a broadcast video by providing analyzed data and the broadcast video.

### BRIEF DESCRIPTION OF THE DRAWINGS

FIG. 1A is a schematic block diagram of an electronic device, a user terminal, and a camera module according to various embodiments.
FIG. 1B is a schematic block diagram of an electronic device according to various embodiments.
FIG. 2 is an operational flowchart of a method of automated broadcasting performed by an electronic device according to various embodiments.
FIG. 3 is a diagram illustrating a plurality of detection cameras and a plurality of filming cameras arranged in a filming space according to various embodiments.
FIGS. 4A, 4B, 4C, and 4D are diagrams illustrating an operation in which an electronic device recognizes an object, according to various embodiments.
FIGS. 5A, 5B, 5C, and 5D are diagrams illustrating an operation in which an electronic device determines a position of an object, according to various embodiments.
FIGS. 6A, 6B, 6C, 6D, 6E, 6F, 6G, and 6H are diagrams illustrating a broadcast video determined by an electronic device according to various embodiments.
FIG. 7 is an operational flowchart of a method of automated broadcasting performed by an electronic device according to various embodiments.

### MODES FOR CARRYING OUT THE INVENTION

Specific structural or functional descriptions of the embodiments are disclosed for illustrative purposes only, and may be changed and implemented in various forms. Accordingly, the actually implemented forms are not limited to the specific embodiments disclosed, and the scope of the present specification includes changes, equivalents, or substitutes included in the technical idea described in the embodiments.

Although terms such as first or second may be used to describe various components, these terms should be interpreted only for the purpose of distinguishing one component from another component. For example, a first component may be named a second component, and similarly, the second component may also be named the first component.

When a certain component is referred to as being "connected" to another component, it should be understood that the certain component may be directly connected or joined to the other component, but another component may exist therebetween.

A singular expression includes a plural expression unless the context clearly indicates otherwise. In the present document, each of phrases such as "A or B", "at least one of A and B", "at least one of A or B", "A, B, or C", "at least one of A, B, and C", and "at least one of A, B, or C" may include any one of the items listed together in the corresponding phrase among the phrases, or all possible combinations thereof. In the present specification, it should be understood that terms such as "comprise" or "have" are intended to designate the existence of a described feature, number, step, operation, component, part, or a combination thereof, and do not preclude in advance the existence or possibility of addition of one or more other features, numbers, steps, operations, components, parts, or combinations thereof.

Unless otherwise defined, all terms used herein, including technical or scientific terms, have the same meanings as those generally understood by those of ordinary skill in the relevant art. Terms such as those defined in commonly used dictionaries should be interpreted as having meanings consistent with the meanings in the context of the related art, and are not interpreted in ideal or excessively formal meanings unless clearly defined in the present specification.

The term "module" used in the present document may include a unit implemented in hardware, software, or firmware, and may be used interchangeably with terms such as, for example, logic, logic block, part, or circuit. A module may be an integrally configured part, or a minimum unit of the part or a portion thereof that performs one or more functions. For example, according to an embodiment, the module may be implemented in the form of an application-specific integrated circuit (ASIC).

The term '~unit' used in the present document refers to software or a hardware component such as an FPGA or an ASIC, and the '~unit' performs certain roles. However, the '~unit' is not limited to software or hardware. The '~unit' may be configured to reside in an addressable storage medium, or may be configured to run one or more processors. For example, the '~unit' may include components such as software components, object-oriented software components, class components, and task components, as well as processes, functions, attributes, procedures, subroutines, segments of program code, drivers, firmware, microcode, circuits, data, databases, data structures, tables, arrays, and variables. Functions provided in the components and the '~units' may be combined into a smaller number of components and '~units', or may be further separated into additional components and '~units'. In addition, the components and the '~units' may be implemented to run one or more CPUs in a device or a secure multimedia card. Also, the '~unit' may include one or more processors.

Hereinafter, embodiments will be described in detail with reference to the accompanying drawings. In the description with reference to the accompanying drawings, the same components are given the same reference numerals regardless of the drawing numerals, and redundant descriptions thereof will be omitted.

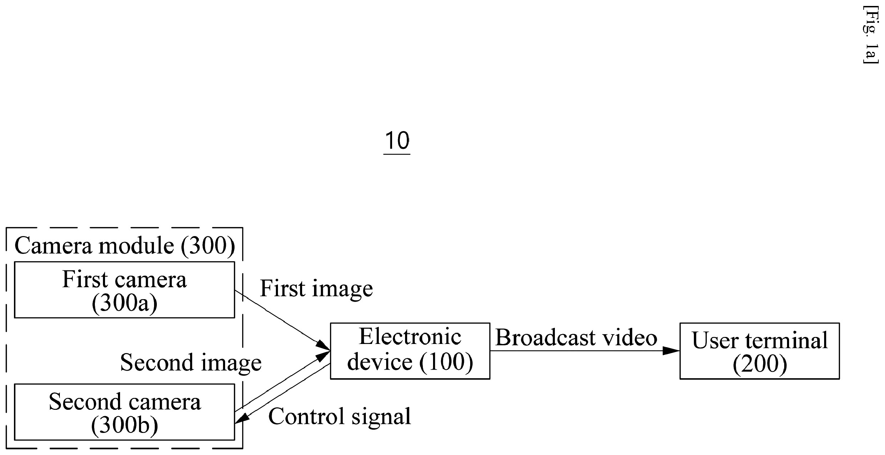

FIG. 1A is a schematic block diagram of an electronic device 100, a user terminal 200, and a camera module 300 according to various embodiments.

As illustrated in FIG. 1A, a system 10 may include the electronic device 100, the user terminal 200, and the camera module 300.

Referring to FIG. 1A, the electronic device 100 according to various embodiments may receive a plurality of first images from a plurality of first cameras 300a (e.g., a plurality of detection cameras 300a). The electronic device 100 may identify at least one object existing in a filming space by using the plurality of first images. For example, the electronic device 100 may identify the at least one object by inputting the plurality of first images into a trained first model 140. For example, the first model 140 may be trained to output, when a plurality of images are input, types of objects (e.g., a player, a ball, a referee, a goalpost, a table tennis table, etc.) included in the plurality of images. The electronic device 100 may identify the object for each set frame.

As an example, the electronic device 100 may determine a position of the identified object by using the plurality of first images. For example, the electronic device 100 may determine the position of the identified object in a three-dimensional coordinate system set with respect to the filming space. The electronic device 100 may determine the position of the object for each set frame.

As an example, the electronic device 100 may determine a control signal based on the type and position of the identified object. For example, the electronic device 100 may determine the control signal by inputting the position of the identified object into a trained second model 150. The second model 150 may be trained to output a control signal when the type of the identified object and the position of the object are input.

As an example, the electronic device 100 may transmit the control signal to a plurality of second cameras 300b (e.g., a plurality of filming cameras 300b). The electronic device 100 may control the plurality of second cameras 300b by using the control signal.

For example, the electronic device 100 may determine a broadcast video according to the control signal. The electronic device 100 may determine the broadcast video by using at least one second image among a plurality of second images received from the plurality of second cameras 300b.

As an example, the control signal may include information regarding a second camera 300b selected from among the plurality of second cameras 300b to generate the broadcast video, and information regarding an operation of the selected second camera 300b (e.g., pan, tilt, zoom (PTZ) values, direction/angle/magnification values, etc.). The electronic device 100 may determine, according to the control signal, a second camera 300b from which a second image to be used as the broadcast video is to be obtained. The electronic device 100 may determine, as the broadcast video, the second image obtained from the second camera 300b determined from among the plurality of second cameras 300b.

As an example, the plurality of second cameras 300b may be controlled according to the control signal received from the electronic device 100. For example, each of the plurality of second cameras 300b may operate according to information included in the control signal (e.g., pan, tilt, zoom (PTZ) values, direction/angle/magnification values, etc.). For example, each of the plurality of second cameras 300b may include an operation module (e.g., an actuator, a motor, etc.). Each of the operation modules of the plurality of second cameras 300b may operate according to the control signal.

As an example, the electronic device 100 may transmit the broadcast video to the user terminal 200. The electronic device 100 may receive, from the user terminal 200, information regarding the user terminal 200 (e.g., a terminal type, terminal specifications, user information, etc.). The electronic device 100 may post-process the broadcast video based on the information regarding the user terminal 200. The electronic device 100 may transmit the post-processed broadcast video to the user terminal 200.

For example, the post-processing may include processing of changing a format of a video, compressing a video, or changing a size of a video. For example, the post-processing may include processing of changing contents of the broadcast video, such as adding an additional video (e.g., an advertisement video) to the broadcast video or adding an auxiliary object.

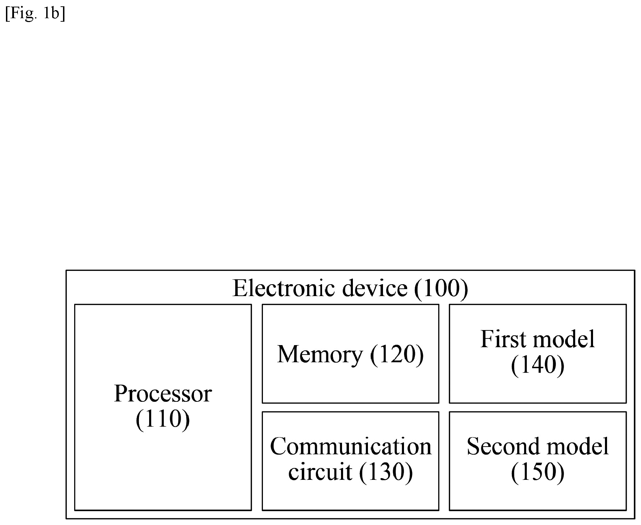

FIG. 1B is a schematic block diagram of the electronic device 100 according to various embodiments.

Referring to FIG. 1B, the electronic device 100 according to various embodiments may include a processor 110, a memory 120, a communication circuit 130, a first model 140, and a second model 150.

The memory 120 may store various data used by at least one component (e.g., the processor 110) of the electronic device 100. For example, the data may include software (or a program, an application, etc.), and input data or output data for a command related thereto. The memory 120 may include a volatile memory or a non-volatile memory.

As an example, the processor 110 may execute software (or a program, an application, etc.) to control at least one other component of the electronic device 100 connected to the processor 110. The processor 110 may display or output a result processed by executing the software through a display module or a sound output module (e.g., a speaker). The processor 110 may execute the software to perform data processing or computations. For example, the processor 110 may store, in the memory 120, a command or data received from another component (e.g., the communication circuit 130, the first model 140, or the second model 150) of the electronic device 100. The processor 110 may process the command or data stored in the memory 120, and store resulting data in the memory 110.

As an example, the communication circuit 130 may establish a direct communication channel or a wireless communication channel between the electronic device 100 and an external electronic device (e.g., the user terminal 200, the first camera 300a, the second camera 300b, or the camera module 300), and support wired/wireless communication through the established communication channel.

For example, the electronic device 100 may establish a communication channel with the user terminal 200 by using the communication circuit 130, and transmit the broadcast video. For example, the electronic device may establish a communication channel with the first camera 300a by using the communication circuit 130, and receive the first image from the first camera 300a. For example, the electronic device may establish a communication channel with the second camera 300b by using the communication circuit 130, and receive the second image from the second camera 300b. The electronic device 100 may transmit the control signal to the second camera 300b.

As an example, the first model 140 may be trained to output, when a plurality of images (e.g., the plurality of first images) are input, a type of an object included in the plurality of images. For example, descriptions of known neural network models for recognizing an object in an image may be applied substantially in the same manner to the first model 140. For example, descriptions of known object detection models and object recognition models may be applied substantially in the same manner to the first model 140.

According to an embodiment, the electronic device 100 may determine a position of the identified at least one object. For example, the electronic device 100 may determine the position of the object identified by the first model 140. The electronic device 100 may determine the position (e.g., three-dimensional coordinates) of the identified object in the set three-dimensional coordinate system.

As an example, the electronic device 100 may identify additional information by inputting the plurality of first images into the first model 140. For example, the additional information may include a player's jersey number, a referee's gesture, and information displayed on a scoreboard. The additional information is not limited to the above examples, and may include objects and/or information that can be recognized by analyzing the plurality of first images.

As an example, the second model 150 may be trained to output, when the type and position of an object are input, a control signal for generating a broadcast video. For example, the type and position of the object may be input into the second model 150 for each set frame. The second model 150 may be trained to output a control signal by using the type and position of the object input for each set frame.

For example, the electronic device 100 may determine a type of at least one object included in the plurality of first images for each set frame. The electronic device 100 may determine a position of the at least one object included in the plurality of first images for each set frame. The electronic device 100 may determine the control signal by inputting the type and position of the at least one object into the second model 150 for each set frame.

For example, when a table tennis game is in progress in the filming space, the electronic device 100 may identify a type of each object (e.g., a player, a referee, a table tennis ball, a table tennis table, a scoreboard, etc.) by using the plurality of first images obtained from the plurality of detection cameras 300a. The electronic device 100 may determine a position of each identified object.

The table tennis game may include events such as player entrance, warm-up, game start, serve, rally, and scoring. The position of each object may have different characteristics depending on the nature of the events included in the table tennis game.

For example, when players enter, the players may stand at waiting positions. In addition, positions of the players during warm-up before the game start may differ from positions of the players during a serve/rally. In the case of a serve, a player may take a ready posture, throw the table tennis ball above a certain height, and hit the table tennis ball. In the case of a serve, the table tennis ball may stay at a low position for a certain period of time, rise above a certain height, and then descend again to be hit by the player.

In the case of a rally, the table tennis ball may travel back and forth between both sides of the table tennis table at a high speed. In the case of a rally, the players may move on both sides of the table tennis table, respectively.

When the table tennis ball leaves the table tennis table without colliding with the table tennis table, collides with an area other than the opponent's side of the table tennis table, or a player fails to hit the table tennis ball, a score may be made.

As described above, for each event (e.g., player entrance, warm-up, serve, rally, scoring, etc.), the position (or time-series position change) of an object (a player, a ball, a referee, etc.) may have different characteristics. For each event, a filming camera that captures a video to be transmitted as the broadcast video may be determined differently. For each event, the direction/angle/magnification, etc. of the selected filming camera may be determined differently.

For example, in a table tennis game, a serve, a rally, and scoring may take place. The electronic device 100 may determine the type (e.g., a player, a ball, a referee, etc.) and position of each object for each set frame. The electronic device 100 may input the type and position of the object into the second model 150 for each set frame.

For example, when a serve is in progress, the electronic device 100 may input, into the second model 150 for each set frame, the type and position of the object at the time the serve is in progress. The second model 150 may output a control signal by using the type and position of the object at the time the serve is in progress. For example, the control signal may include information for determining, as the broadcast video, a video captured by closing up on the player making the serve.

The electronic device 100 may transmit the control signal to the plurality of filming cameras 300b. The electronic device 100 may determine, as the broadcast video according to the control signal, a video obtained from the filming camera capturing a close-up of the player making the serve.

For example, when a rally is in progress, the electronic device 100 may input, into the second model 150 for each set frame, the type and position of the object at the time the rally is in progress. The second model 150 may output a control signal by using the type and position of the object at the time the rally is in progress. For example, the control signal may include information for determining, as the broadcast video, a video captured from behind one player toward the table tennis table.

The electronic device 100 may transmit the control signal to the plurality of filming cameras 300b. The electronic device 100 may determine, as the broadcast video according to the control signal, a video obtained from the filming camera capturing the direction of the table tennis table from behind one player.

For example, when a score is made, the electronic device 100 may input, into the second model 150 for each set frame, the type and position of the object at the time the score is made. The second model 150 may output a control signal by using the type and position of the object at the time the score is made. For example, the control signal may include information for determining, as the broadcast video, a video captured by closing up on the player who scored.

The electronic device 100 may transmit the control signal to the plurality of filming cameras 300b. The electronic device 100 may determine, as the broadcast video according to the control signal, a video obtained from the filming camera capturing a close-up of the player who scored.

As described above, a sports game may be divided into respective events. When the respective events constituting the sports game occur, the respective objects may have different position characteristics (or time-series position changes). The electronic device 100 may input the type and position of each object into the second model 150 to select at least one filming camera from among the plurality of filming cameras 300b arranged in the filming space, and control operation characteristics (e.g., PTZ values, direction/angle/magnification, etc.) of the selected filming camera.

In the above example, the operation of the electronic device 100 has been described for the case where a table tennis game is in progress, but the operation is not limited thereto. For example, even when various games such as soccer, basketball, tennis, and hockey, or ceremonies are in progress, the electronic device 100 may operate substantially in the same manner as described above.

As an example, training data for training the second model 150 may include input data and ground truth data. For example, the training data may include the types and positions of respective objects obtained in a filming space in which the plurality of detection cameras 300a and the plurality of filming cameras 300b are installed, and a control signal for generating a broadcast video.

For example, the training data may include the types and positions of respective objects obtained in a filming space in which the plurality of detection cameras 300a and the plurality of filming cameras 300b are installed, and a broadcast video. The broadcast video may be understood substantially in the same manner as the control signal for generating the broadcast video. For example, the broadcast video may indicate the filming camera that captured the video used for the broadcast video, and operation information (e.g., PTZ values, direction/angle/magnification, etc.) of the filming camera.

The second model 150 may be trained to output a control signal for generating a broadcast signal by using the input type and position of each object. The electronic device 100 may generate the broadcast video according to the positions of the respective objects by using the control signal.

As an example, the electronic device 100 may identify an event that has occurred in the filming space by inputting the type and position of at least one object into the second model 150. The electronic device 100 may determine, by using the second model 150, a control signal for generating a broadcast video according to the event. For example, training data for training the second model 150 may include the type and position of each object, an event, and a control signal. The second model 150 may be trained to output an event when the type and position of each object are input. The second model 150 may be trained to output a control signal when the type and position of each object and an event are input. The event may be intermediate output data of the second model 150, and the control signal may be final output data of the second model 150.

As an example, the electronic device 100 may generate a control signal for generating a replay video by inputting the type and position of the object into the second model 150. For example, the control signal for generating the replay video may include information regarding a second image to be used as the replay video among the plurality of second images of previous frames. In the control signal for generating the replay video, the information regarding the second image to be used as the replay video may include a start time point, an end time point, and a playback speed (e.g., 0.5x speed, 2x speed, etc.) of the replay video.

For example, the control signal may include information for generating a replay video from a previously transmitted broadcast video. The electronic device 100 may generate the replay video by using the broadcast video previously transmitted to the user terminal 200.

For example, the control signal may include information for generating a replay video from a plurality of second images of previous frames that have not been used for the broadcast video. The electronic device 100 may generate the replay video by using at least one second image among the plurality of second images that have not been transmitted to the user terminal 200.

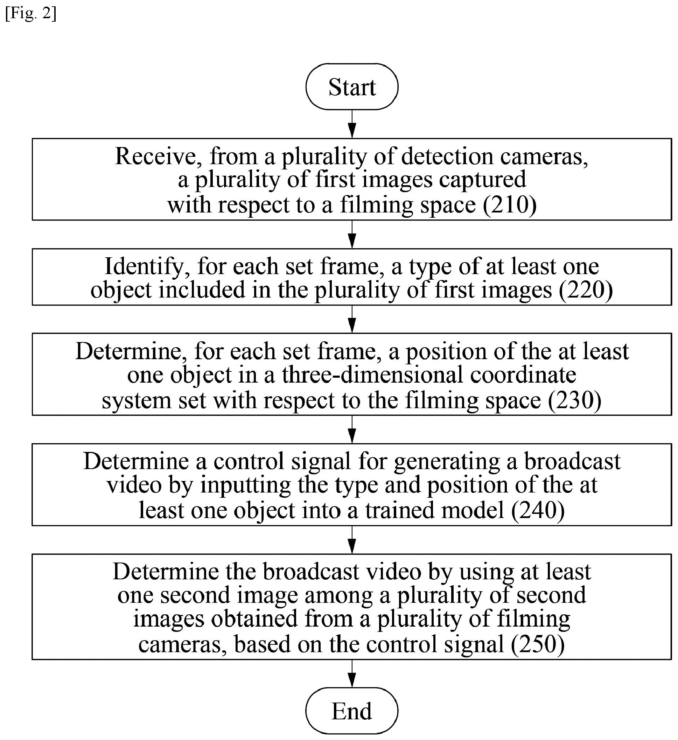

FIG. 2 is an operational flowchart of a method of automated broadcasting performed by the electronic device 100 according to various embodiments.

As an example, in operation 210, the electronic device 100 may receive, from the plurality of detection cameras 300a, a plurality of first images captured with respect to the filming space. For example, a position and an operation of each of the plurality of detection cameras 300a may be fixed. Each of the plurality of detection cameras 300a may have fixed operation information (e.g., PTZ values, direction/angle/magnification, etc.).

As an example, in operation 220, the electronic device 100 may identify at least one object included in the plurality of first images for each set frame. For example, the electronic device 100 may identify the at least one object included in the plurality of first images by inputting the plurality of first images into the first model 140. For example, the first model 140 may output a type of the at least one object included in the plurality of first images.

As an example, in operation 230, the electronic device 100 may determine, for each set frame, a position of the at least one object in the three-dimensional coordinate system set with respect to the filming space.

For example, the electronic device 100 may determine the position (three-dimensional coordinates) of the object in the set three-dimensional coordinate system based on two-dimensional coordinates of the object in the plurality of first images and the positions of the plurality of detection cameras 300a.

For example, the electronic device 100 may determine one or more positions of the object depending on the type of the object. For example, when the object is a person, the electronic device 100 may determine a head position and a chest center position as the positions of the person. For example, when the object is a ball, the electronic device 100 may determine a center position of the ball as the position of the ball.

The above operation of determining the position of the object depending on the type of the object is illustrative, and the electronic device 100 may determine the position of the object differently from the above examples. For example, when the object is a person, the electronic device 100 may determine skeleton information of the person, and determine each joint position of the person as the position of the person.

As an example, in operation 240, the electronic device 100 may determine a control signal for generating a broadcast video by inputting the type and position of the at least one object into a trained model (e.g., the second model 150).

For example, the second model 150 may be trained to output a control signal by using the input type and position of the object. For example, the control signal may include information for generating the broadcast video. The control signal may include information for controlling operations of the plurality of filming cameras 300b. The control signal may include information regarding a filming camera to be used for the broadcast video among the plurality of filming cameras 300b.

As an example, in operation 250, the electronic device 100 may determine the broadcast video by using at least one second image among the plurality of second images obtained from the plurality of filming cameras 300b, based on the control signal. The electronic device 100 may generate the broadcast video according to the control signal output from the second model 150, thereby determining an appropriate second image as the broadcast video according to the type and position of the object.

As an example, the electronic device 100 may determine a control signal for generating a replay video by inputting the type and position of the at least one object into the model.

As an example, the electronic device 100 may generate a control signal for generating a replay video by inputting the type and position of the object into the second model 150.

As an example, the electronic device 100 may determine the replay video based on the plurality of second images of previous frames obtained from the plurality of filming cameras 300b, according to the control signal for generating the replay video.

For example, the control signal may include information for generating a replay video from a previously transmitted broadcast video. For example, the control signal may include information for generating a replay video from a plurality of second images of previous frames that have not been used for the broadcast video.

Operations 210 to 250 illustrated in FIG. 2 may be performed substantially in the same manner by the processor 110 of the electronic device 100.

Operations 210 to 250 illustrated in FIG. 2 may be performed sequentially, but are not necessarily performed sequentially. For example, the order of the operations may be changed, and at least two of the operations may be performed in parallel.

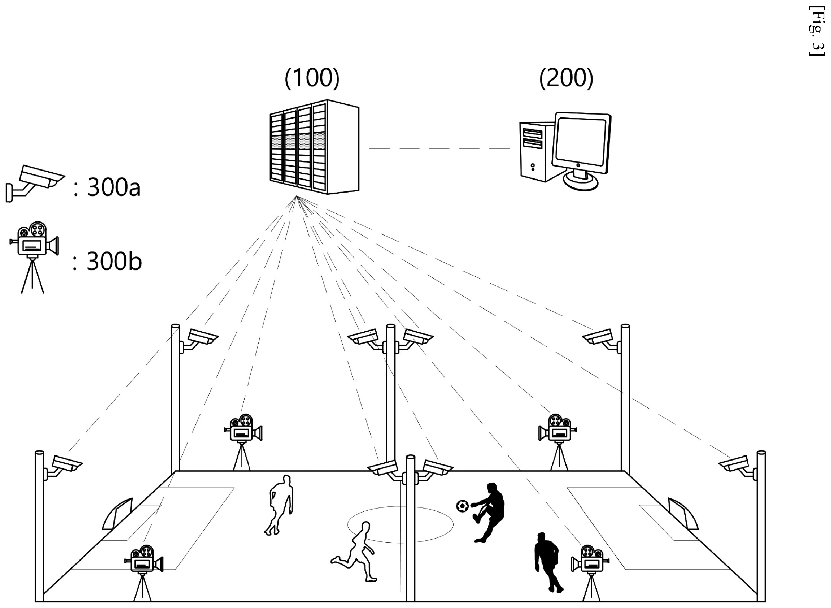

FIG. 3 is a diagram illustrating a plurality of detection cameras 300a and a plurality of filming cameras 300b arranged in a filming space according to various embodiments.

FIG. 3 is a diagram illustrating the plurality of detection cameras 300a and the plurality of filming cameras 300b arranged when the filming place is a soccer stadium.

As an example, the electronic device 100 may receive a plurality of first images from the plurality of detection cameras 300a arranged in the filming place. The electronic device 100 may identify at least one object by using the plurality of first images. The electronic device 100 may determine a position of the identified at least one object by using the plurality of first images. The electronic device 100 may determine the position (e.g., three-dimensional coordinates) of the at least one object in the set three-dimensional coordinate system.

As an example, the electronic device 100 may determine a control signal for generating a broadcast video by inputting the type and position of the at least one object into a trained model (e.g., the second model 150). The electronic device 100 may receive a plurality of second images from the plurality of filming cameras 300b. The electronic device 100 may generate the broadcast video by using at least one second image among the plurality of second images, according to the control signal.

The electronic device 100 may transmit the generated broadcast video to the user terminal 200.

The arrangement of the plurality of detection cameras 300a and the plurality of filming cameras 300b illustrated in FIG. 3 is illustrative, and is not limited to the example illustrated in FIG. 3.

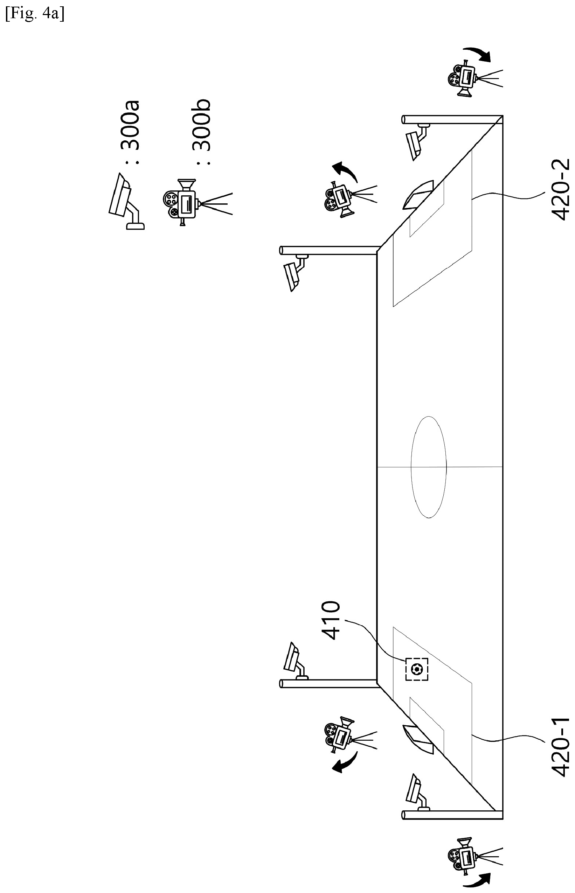

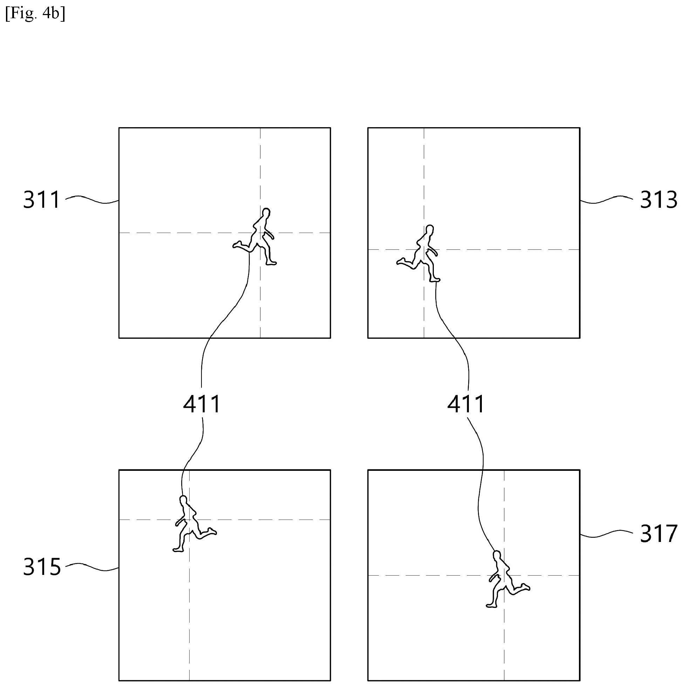

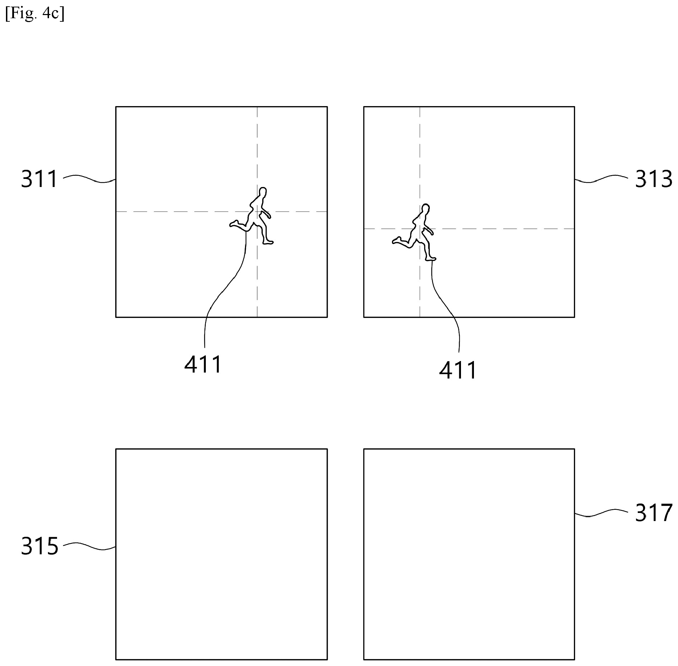

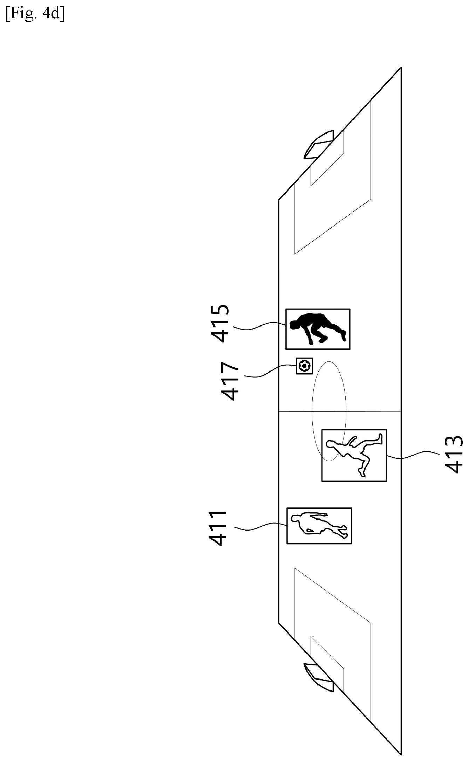

FIGS. 4A, 4B, 4C, and 4D are diagrams illustrating an operation in which the electronic device 100 recognizes an object, according to various embodiments.

FIG. 4A is a diagram illustrating a plurality of detection cameras 300a, a plurality of filming cameras 300b, an object 410, and environments 420-1 and 420-2 arranged in a filming place.

As an example, the electronic device 100 may identify the object 410 by using the plurality of first images received from the plurality of detection cameras 300a. The electronic device 100 may determine a position of the object 410 by using the plurality of first images received from the plurality of detection cameras 300a.

As an example, the electronic device 100 may identify additional information by using the plurality of first images. For example, the electronic device 100 may identify additional information from objects included in the plurality of first images. For example, the additional information may include a player's jersey number, a referee's gesture, and information displayed on a scoreboard. The electronic device 100 may identify the environments 420-1 and 420-2 from the plurality of first images.

In the above example, the electronic device 100 may identify the environments 420-1 and 420-2 or the additional information by inputting the plurality of first images into a trained model (e.g., the first model 140).

FIG. 4B is a diagram illustrating a plurality of first images 311, 313, 315, and 317 received from the plurality of detection cameras 300a.

In FIG. 4B, each of the plurality of first images 311, 313, 315, and 317 may include an object 411. The plurality of first images 311, 313, 315, and 317 may be captured from the plurality of detection cameras 300a arranged at different positions, respectively. Positions of the object 411 in the respective plurality of first images 311, 313, 315, and 317 may be different from each other.

The electronic device 100 may identify the object 411 by inputting the plurality of first images 311, 313, 315, and 317 into the first model 140. The electronic device 100 may determine the type of the object 411 to be a player.

FIG. 4C is a diagram illustrating a plurality of first images 311, 313, 315, and 317 received from the plurality of detection cameras 300a. In FIG. 4C, unlike FIG. 4B, the first image 311 and the first image 313 include the object 411, but the first image 315 and the first image 317 do not include the object 411. For example, when the detection cameras that captured the first image 315 and the first image 317 do not face the direction of the object 411, the first image 315 and the first image 317 may not include the object 411. For example, even when the detection cameras that captured the first image 315 and the first image 317 face the direction of the object 411, if the object 411 is covered by an obstacle or another object, the first image 315 and the first image 317 may not include the object 411.

As illustrated in FIG. 4C, even when the first image 311 and the first image 313 include the object 411 but the first image 315 and the first image 317 do not include the object 411, the electronic device 100 may identify the object 411 by using the plurality of first images 311, 313, 315, and 317.

FIG. 4D is a diagram illustrating objects 411, 413, 415, and 417 recognized by using the plurality of first images 311, 313, 315, and 317.

As illustrated in FIG. 4D, the electronic device 100 may identify the objects 411, 413, 415, and 417. For example, the electronic device 100 may identify the object 411 and the object 413 as players. For example, the electronic device 100 may identify the object 415 as a referee. For example, the electronic device 100 may identify the object 417 as a soccer ball.

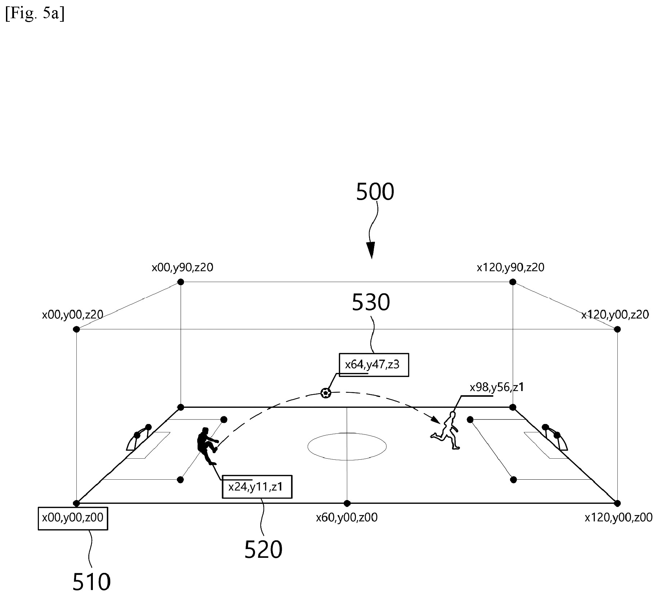

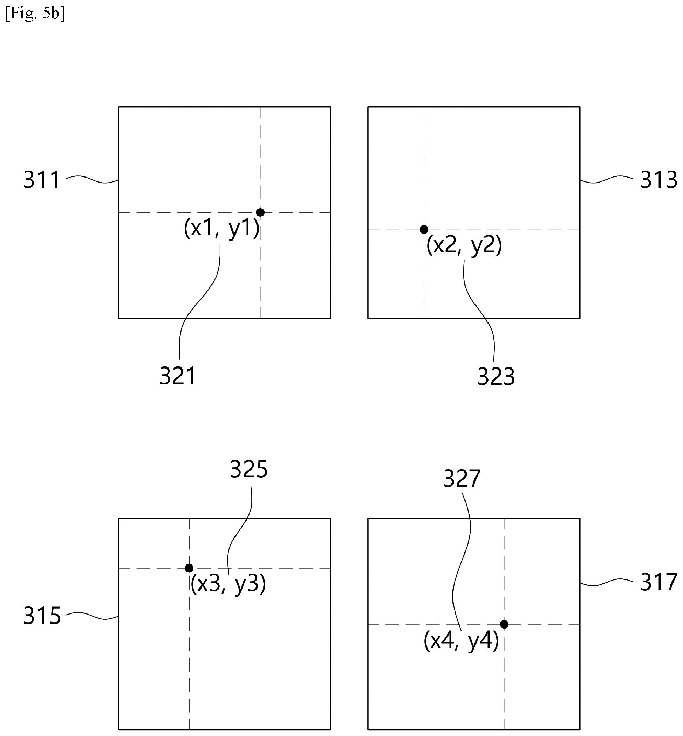

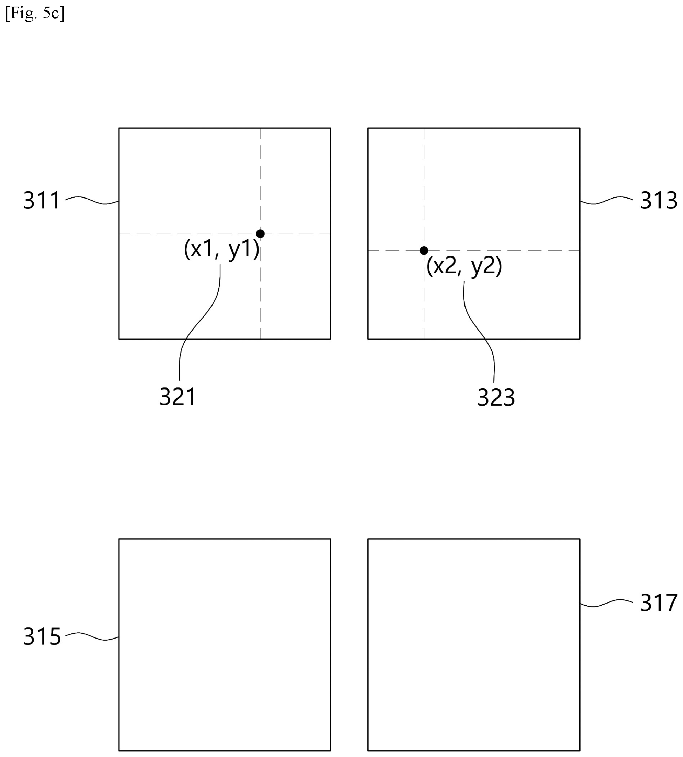

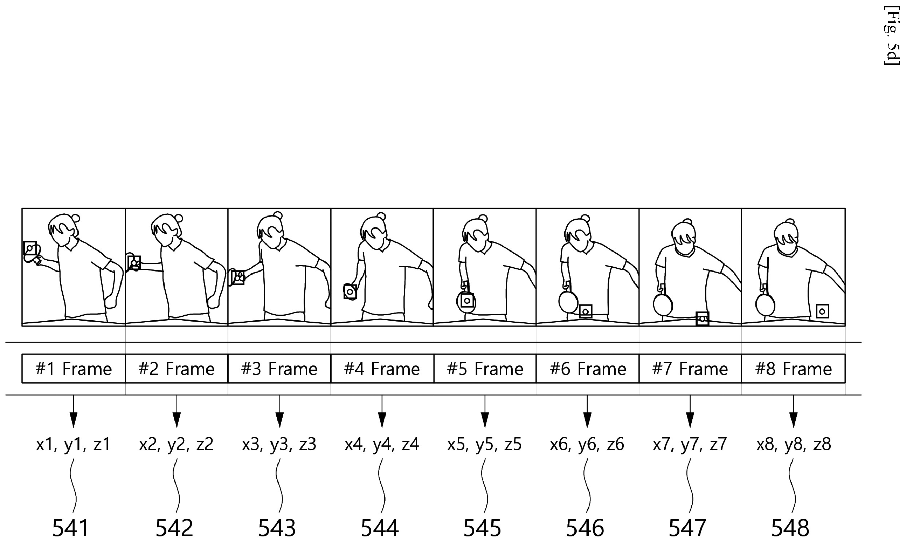

FIGS. 5A, 5B, 5C, and 5D are diagrams illustrating an operation in which the electronic device 100 determines a position of an object, according to various embodiments.

FIG. 5A is a diagram illustrating a three-dimensional coordinate system 500 and coordinates 520 and 530 of objects according to various embodiments.

For example, the three-dimensional coordinate system 500 may be set with respect to the filming space. For example, the plurality of detection cameras 300a may be arranged around the filming space. Through calibration, distortion of the plurality of first images obtained from the plurality of detection cameras 300a arranged around the filming space may be removed.

For example, an origin 510 of the three-dimensional coordinate system 500 may be determined to be an arbitrary position in the filming place. As illustrated in FIG. 5A, one corner of the soccer stadium may be determined as the origin 510 of the three-dimensional coordinate system 500.

For example, a calibration plate arranged in the filming place may be captured by at least one detection camera. In one or more images capturing the calibration plate, pixels in which the calibration plate is displayed may be understood as capturing the same position. By repeating capturing of the calibration plate arranged at different places in the filming place by using one or more detection cameras, the position of each detection camera may be estimated (or determined), and a three-dimensional coordinate system (having an arbitrary position in the filming place as the origin) may be set.

As an example, when the origin 510 of the three-dimensional coordinate system 500 is determined, the three-dimensional coordinate system 500 may be set with respect to the filming place. Positions (e.g., three-dimensional coordinates) of the plurality of detection cameras 300a may be determined in the three-dimensional coordinate system 500. Positions (e.g., three-dimensional coordinates) of the plurality of filming cameras 300b may be determined in the three-dimensional coordinate system 500.

As illustrated in FIG. 5A, the electronic device 100 may determine the position (e.g., three-dimensional coordinates) of an object. For example, the electronic device 100 may determine the position of a person to be coordinates 520 ((x24, y11, z1) or (24, 11, 1)). The electronic device 100 may determine the position of a ball to be coordinates 520 ((x64, y47, z3) or (64, 47, 3)).

FIG. 5B is a diagram illustrating coordinates 321, 323, 325, and 327 of an object in the plurality of first images 311, 313, 315, and 317 received from the plurality of detection cameras 300a.

The plurality of first images 311, 313, 315, and 317 are two-dimensional, and the coordinates 321, 323, 325, and 327 of the object in each image may be expressed as two-dimensional coordinates (e.g., (x1, y1), (x2, y2), (x3, y3), and (x4, y4)).

For example, the position of the detection camera that captured the first image 311 may be (x1, y1, z1). By using the coordinates 321 of the object in the first image 311, a direction and/or an angle of viewing the object from the position (x1, y1, z1) of the detection camera may be calculated.

By using the position (x1', y1', z1') of the detection camera and the direction and/or angle of viewing the object from the position (x1', y1', z1') of the detection camera, a virtual first straight line passing through the position (x1', y1', z1') of the detection camera and the object may be calculated.

Substantially in the same manner as the virtual first straight line passing through the position (x1', y1', z1') of the detection camera and the object is calculated, a virtual second straight line passing through the position (x2', y2', z2') of the detection camera and the object may be calculated by using the coordinates (x2, y2) of the object in the second image 313 and the position (x2', y2', z2') of the detection camera. A virtual third straight line passing through the position (x3', y3', z3') of the detection camera and the object, and a virtual fourth straight line passing through the position (x4', y4', z4') of the detection camera and the object may also be calculated substantially in the same manner as the above examples.

For example, the electronic device 100 may calculate an intersection point of the first to fourth straight lines. The electronic device 100 may determine coordinates of the intersection point of the first to fourth straight lines as the coordinates of the object.

The above description of the operation in which the electronic device 100 determines the coordinates of the object by using the coordinates 321, 323, 325, and 327 of the object in the plurality of first images 311, 313, 315, and 317 and the positions of the plurality of detection cameras 300a is illustrative, and is not limited to the above examples. The electronic device 100 may determine the coordinates of the object by applying a known method of calculating the positions of the plurality of detection cameras 300a in the set three-dimensional coordinate system, or a method that can be easily derived by those of ordinary skill in the art.

FIG. 5C is a diagram illustrating a plurality of first images 311, 313, 315, and 317 received from the plurality of detection cameras 300a. In FIG. 5C, unlike FIG. 5B, the first image 311 and the first image 313 include the object 411, but the first image 315 and the first image 317 do not include the object 411. The electronic device 100 may determine the position of the object by using the coordinates 321 and 323 of the object in the first image 311 and the first image 313, and the positions of the detection cameras that captured the first image 311 and the first image 313.

FIG. 5D is a diagram illustrating an operation in which the electronic device 100 determines the position of an object in time series. The electronic device 100 may determine the position of the object for each set frame. For example, as illustrated in FIG. 5D, when each of the plurality of detection cameras 300a captures images at 8.3 ms / 120 fps, the electronic device 100 may determine the position of the object for every one frame. The electronic device 100 may determine the position 541 of the object (e.g., a table tennis ball) to be (x1, y1, z1) in frame 1. The electronic device 100 may determine the position 542 of the object (e.g., the table tennis ball) to be (x2, y2, z2) in frame 2. The electronic device 100 may determine the position 543 of the object (e.g., the table tennis ball) to be (x3, y3, z3) in frame 3. The electronic device 100 may determine the position 544 of the object (e.g., the table tennis ball) to be (x4, y4, z4) in frame 4. The electronic device 100 may determine the position 545 of the object (e.g., the table tennis ball) to be (x5, y5, z5) in frame 5. The electronic device 100 may determine the position 546 of the object (e.g., the table tennis ball) to be (x6, y6, z6) in frame 6. The electronic device 100 may determine the position 547 of the object (e.g., the table tennis ball) to be (x7, y7, z7) in frame 7. The electronic device 100 may determine the position 548 of the object (e.g., the table tennis ball) to be (x8, y8, z8) in frame 8.

The electronic device 100 may input the position of the object into a trained model (e.g., the second model 150) for each set frame (e.g., every one frame).

The method in which the electronic device 100 determines the position of the object is not limited to the examples illustrated in FIGS. 5A, 5B, 5C, and 5D above. For example, the electronic device 100 may determine the three-dimensional coordinates of the object by using distances between the plurality of detection cameras 300a and the object, and the positions of the detection cameras 300a. For example, the electronic device 100 may calculate a direction from the detection camera toward the object by using the coordinates 321 of the object in the first image 321. The electronic device 100 may determine the position (e.g., three-dimensional coordinates) of the object in the three-dimensional coordinate system by using the position of the detection camera, the direction from the detection camera toward the object, and the distance between the detection camera and the object.

The distances between the plurality of detection cameras 300a and the object may be calculated through various known methods. For example, the plurality of filming cameras 300a may be depth cameras. For example, when the plurality of filming cameras 300a are single cameras, various methods and/or algorithms for estimating a distance between a single camera and an object may be applied.

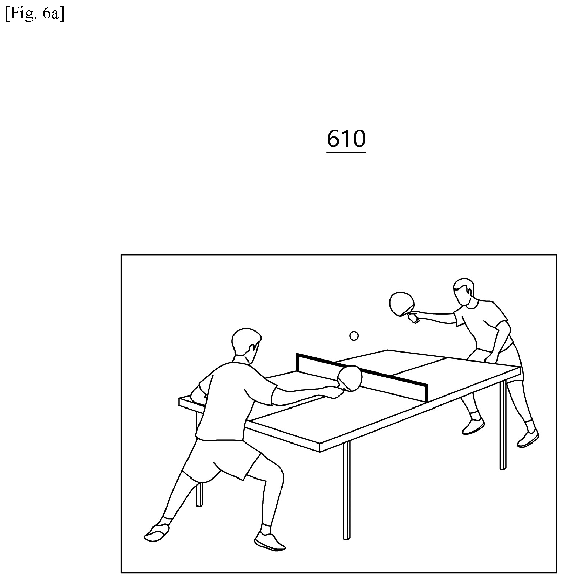

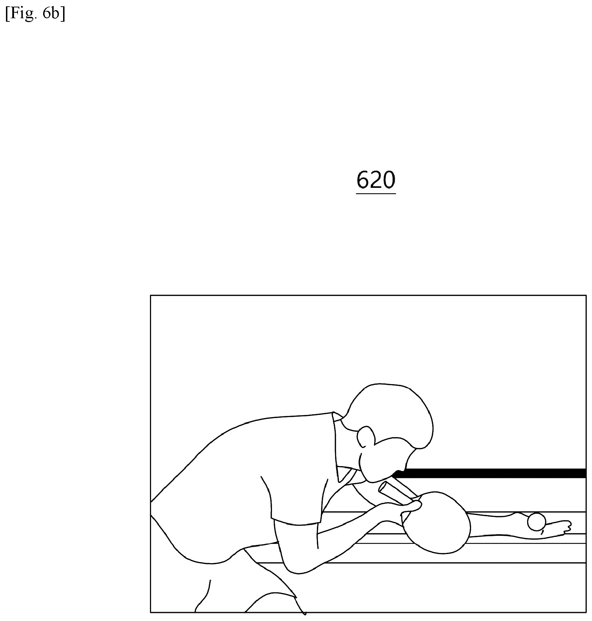

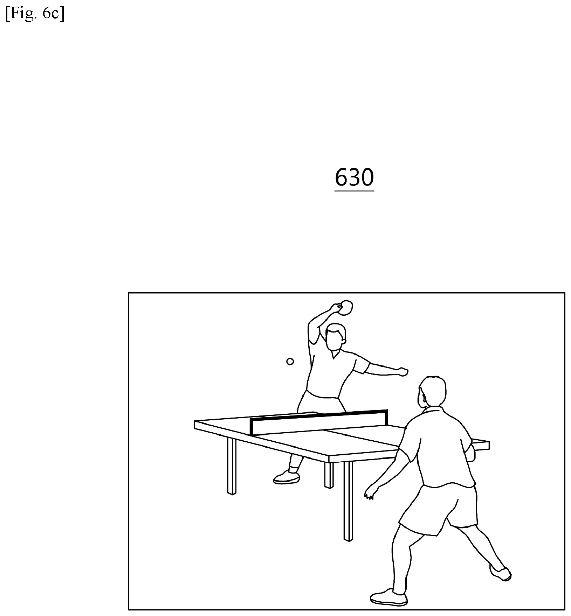

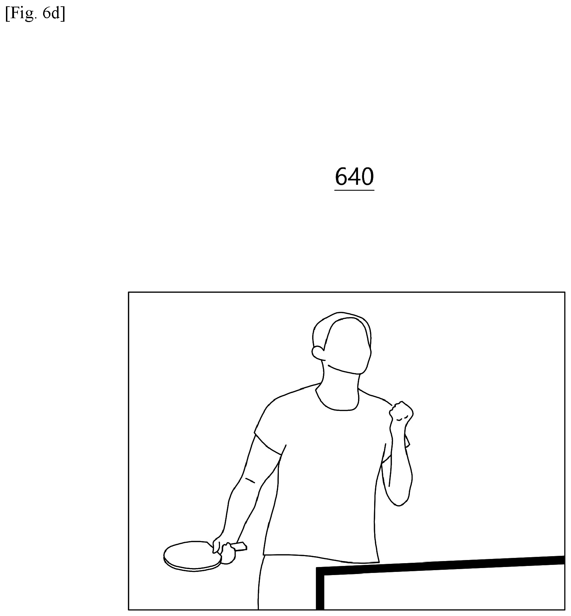

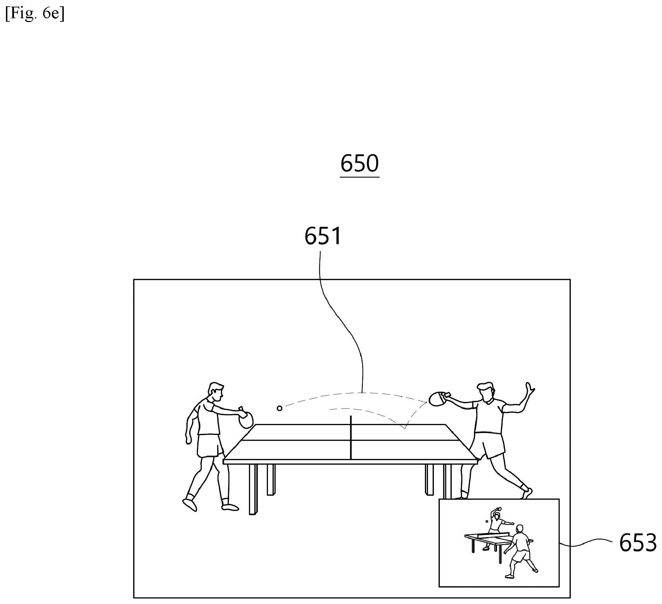

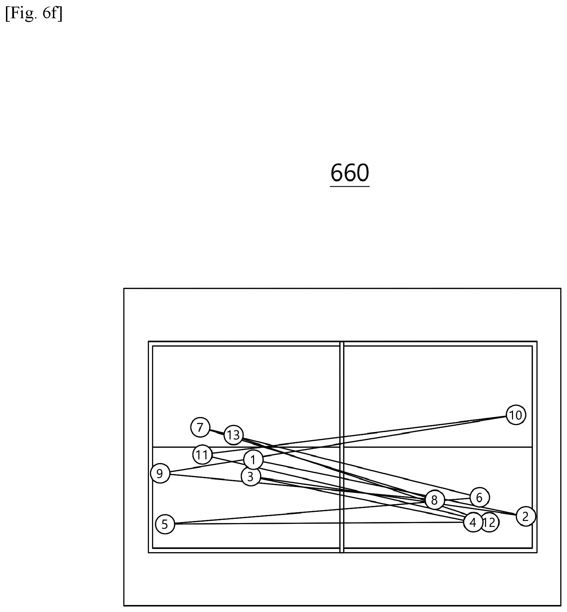

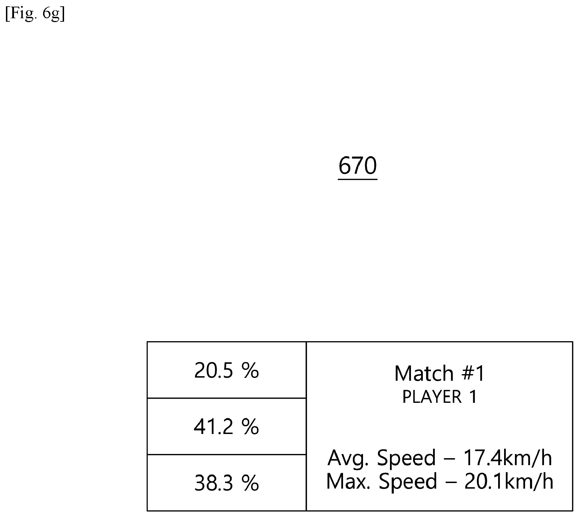

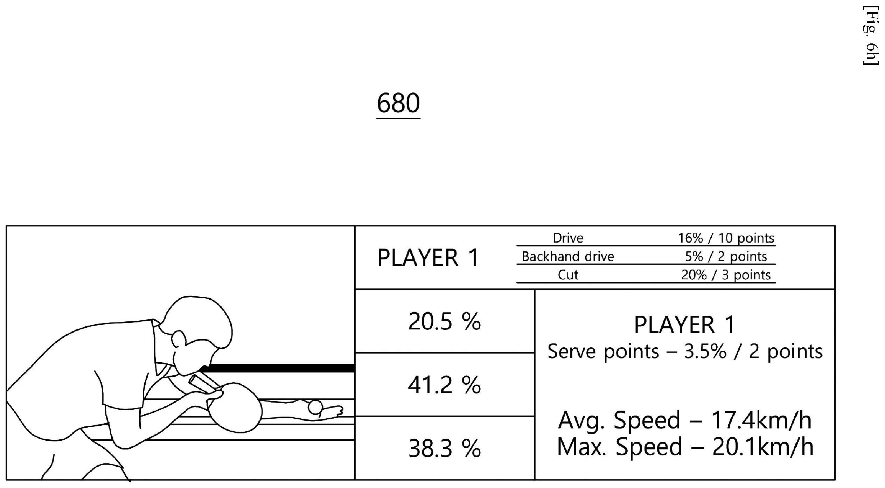

FIGS. 6A, 6B, 6C, 6D, 6E, 6F, 6G, and 6H are diagrams illustrating broadcast videos determined by the electronic device 100 according to various embodiments.

Hereinafter, the operation of the electronic device 100 and generated data will be described by taking a case where a table tennis game is in progress in the filming place as an example, but the description is not limited thereto. For example, even when a ball game such as soccer, basketball, baseball, or volleyball, or a game such as athletics or high jump is in progress in the filming place, the description of the operation of the electronic device 100 and the generated data may be applied substantially in the same manner.

FIGS. 6A to 6D are diagrams illustrating broadcast videos 610, 620, 630, and 640 determined according to the type and position of an object when a table tennis game is in progress.

As illustrated in FIG. 6A, when the table tennis game starts and players enter, the electronic device 100 may determine a broadcast video 610 based on the type (e.g., a player or a ball) and position of the object.

As illustrated in FIG. 6B, when a player prepares a serve, the electronic device 100 may determine a broadcast video 620 based on the type (e.g., a player or a ball) and position of the object.

As illustrated in FIG. 6C, when the serve starts, the electronic device 100 may determine a broadcast video 630 based on the type (e.g., a player or a ball) and position of the object.

As illustrated in FIG. 6D, when a score is made, the electronic device 100 may determine a broadcast video 640 based on the type (e.g., a player or a ball) and position of the object.

In FIGS. 6A to 6D, the electronic device 100 may determine the broadcast videos 610 to 640 by using the plurality of second images received from the plurality of filming cameras 300b, according to the control signal. The electronic device 100 may determine the control signal by inputting the type and position of the object into the trained second model 150.

In FIGS. 6A to 6D, the electronic device 100 may determine the control signal by inputting the type and position of the object into the second model 150. The electronic device 100 may control an operation of at least one filming camera among the plurality of filming cameras 300b according to the control signal. The electronic device 100 may determine the broadcast videos 610 to 640 by using at least one second image among the received plurality of second images.

As illustrated in FIGS. 6A to 6D, when the table tennis game is in progress, the electronic device 100 may automatically determine the broadcast videos 610 to 640. The electronic device 100 may determine, by using the second model 150, the broadcast videos 610 to 640 for smooth and natural broadcasting of the table tennis game according to the type and position of the object.

The progress of the table tennis game in the broadcast videos 610 to 640 illustrated in FIGS. 6A to 6D above is illustrative, and is not limited to the illustrated examples. For example, even in cases such as player entrance, warm-up, side change, break time, and game end, the electronic device 100 may determine a control signal by inputting the type and position of the object into the second model 150, and determine a broadcast video according to the control signal.

FIG. 6E is a diagram illustrating a broadcast video 650 including data.

As an example, the electronic device 100 may determine data regarding at least one object based on the type and position of the at least one object. For example, when the objects are a person and a table tennis ball, the electronic device 100 may determine data regarding the positions of the person and the table tennis ball (e.g., a movement distance, a movement trajectory, an average movement speed, an attack pattern, a defense pattern, a serve success rate, a serve failure rate, etc.).

As an example, the electronic device 100 may determine prediction data by using the type and position of the object and the data. For example, the prediction data may include a win probability of a player.

FIG. 6E illustrates a replay video 650 determined by the electronic device 100 by using one or more second images. The electronic device 100 may determine the replay video 650 including a second image 653. A second image displayed in the background of the replay video 650 may be a different image from the second image 653.

The electronic device 100 may determine the replay video by using at least one second image of previous frames. The electronic device 100 may determine a control signal for generating the replay video 650 by inputting the type (e.g., a person or a table tennis ball) and position of the object into the second model 150. The electronic device 100 may determine, according to the control signal, a start time point and an end time point of the replay video 650, and at least one second image for generating the replay video 650. For example, after a score is made and before the next game proceeds, the electronic device 100 may generate the replay video 650.

For example, the electronic device 100 may generate the replay video 650 by using at least one second image and data. As illustrated in FIG. 6E, the replay video 650 may include data 651. The data 651 may be data regarding the position of the object (e.g., the table tennis ball) (e.g., a trajectory of the ball). The electronic device 100 may determine the replay video 650 including one or more second images and the data.

In FIG. 6E, the case where the video 650 is a replay video has been described as an example, but the video 650 is not limited thereto. For example, when a rally is in progress, the electronic device 100 may determine a broadcast video like the video 650.

FIG. 6F is a diagram illustrating a broadcast video 660 including data.

As illustrated in FIG. 6F, the electronic device 100 may determine the broadcast video 660 indicating the trajectory of the table tennis ball. For example, after a score is made and before the players proceed to the next game, the electronic device 100 may determine the broadcast video 660. The electronic device 100 may determine the broadcast video 660 including data based on the type (e.g., a person or a table tennis ball) and position of the object.

FIG. 6G is a diagram illustrating a broadcast video 670 displaying data provided by the electronic device 100.

As illustrated in FIG. 6G, the data may include data regarding Player 1 in Match 1. The data may include a ratio of areas attacked by Player 1, and an average/maximum speed of the table tennis ball hit by Player 1.

The data illustrated in FIG. 6G is illustrative, and is not limited to the illustrated example.

FIG. 6H is a diagram illustrating data provided by the electronic device 100 and a broadcast video 680.

As illustrated in FIG. 6H, the electronic device 100 may determine the broadcast video 680 including data.

For example, the electronic device 100 may generate a broadcast video in which visualized data is overlapped on the second image, like the video 650 of FIG. 6E. For example, the electronic device 100 may generate the broadcast video 680 in which visualized data is separated from the second image, as illustrated in FIG. 6H.

For example, the data may include, but is not limited to, a scoring ratio/number of points scored for attack patterns (e.g., drive, backhand drive, and cut) of Player 1, a ratio of attack points, a scoring ratio/number of points scored for serve points, an average speed, and a maximum speed.

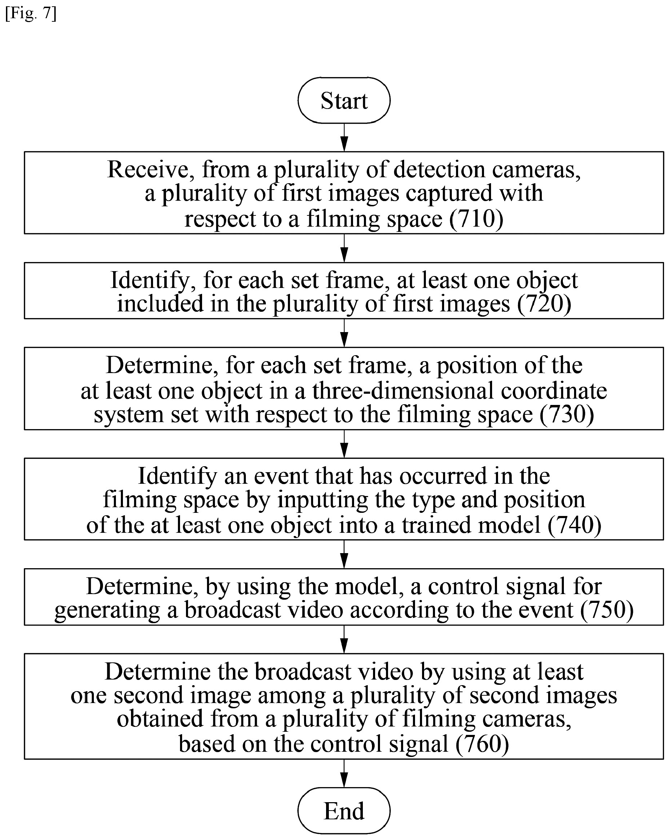

FIG. 7 is an operational flowchart of a method of automated broadcasting performed by the electronic device 100 according to various embodiments.

As an example, in operation 710, the electronic device 100 may receive, from the plurality of detection cameras 300a, a plurality of first images captured with respect to the filming space.

As an example, in operation 720, the electronic device 100 may identify at least one object included in the plurality of first images for each set frame.

As an example, in operation 730, the electronic device 100 may determine, for each set frame, a position of the at least one object in the three-dimensional coordinate system set with respect to the filming space.

As an example, in operation 740, the electronic device 100 may identify an event that has occurred in the filming space by inputting the type and position of the at least one object into a trained model (e.g., the second model 150). For example, when a table tennis game is in progress in the filming space, the event may include occurrences such as player entrance, warm-up, serve preparation, serve, serve fault, rally, scoring, and side change.

The event is not limited to the above examples, and may include all events that can occur from the start to the end of the table tennis game in progressing the table tennis game. In addition, even when a game or function other than the table tennis game is in progress in the filming place, the electronic device 100 may identify the event. For example, the electronic device 100 may identify events that can occur in other games (e.g., in the case of a soccer game, kickoff, offside, foul, scoring, penalty kick, shot, pass, etc.). For example, when a performance is in progress, the electronic device 100 may identify events that can occur in the performance.

As an example, in operation 750, the electronic device 100 may determine, by using the model, a control signal for generating a broadcast video according to the event. For example, the identified event may be an intermediate output of the second model 150. The second model 150 may output the control signal according to the input type and position of the object and the event.

As an example, in operation 760, the electronic device 100 may determine the broadcast video by using at least one second image among the plurality of second images obtained from the plurality of filming cameras 300b, based on the control signal.

For operations 710, 720, 730, and 760 above, the descriptions of operations 210, 220, 230, and 250 of FIG. 2 may be applied substantially in the same manner, respectively.

Operations 710 to 760 illustrated in FIG. 7 may be performed substantially in the same manner by the processor 110 of the electronic device 100.

Operations 710 to 760 illustrated in FIG. 7 may be performed sequentially, but are not necessarily performed sequentially. For example, the order of the operations may be changed, and at least two of the operations may be performed in parallel.

The embodiments described above may be implemented as hardware components, software components, and/or a combination of hardware components and software components. For example, the devices, methods, and components described in the embodiments may be implemented by using a general-purpose computer or a special-purpose computer, such as, for example, a processor, a controller, an arithmetic logic unit (ALU), a digital signal processor, a microcomputer, a field programmable gate array (FPGA), a programmable logic unit (PLU), a microprocessor, or any other device capable of executing and responding to instructions. A processing device may execute an operating system (OS) and a software application executed on the operating system. In addition, the processing device may access, store, manipulate, process, and generate data in response to execution of software. For convenience of understanding, the processing device may be described as being used singly in some cases, but those of ordinary skill in the art will appreciate that the processing device may include a plurality of processing elements and/or a plurality of types of processing elements. For example, the processing device may include a plurality of processors, or one processor and one controller. In addition, other processing configurations, such as a parallel processor, are also possible.

Software may include a computer program, code, instructions, or a combination of one or more thereof, and may configure the processing device to operate as desired, or command the processing device independently or collectively. The software and/or data may be embodied permanently or temporarily in any type of machine, component, physical device, virtual equipment, computer storage medium or device, or transmitted signal wave, in order to be interpreted by the processing device or to provide commands or data to the processing device. The software may be distributed over network-connected computer systems, and stored or executed in a distributed manner. The software and data may be stored in a computer-readable recording medium.

The method according to the embodiments may be implemented in the form of program instructions that can be executed through various computer means, and recorded in a computer-readable medium. The computer-readable medium may store program instructions, data files, data structures, and the like, alone or in combination, and the program instructions recorded in the medium may be specially designed and configured for the embodiments, or may be known and usable to those skilled in computer software. Examples of the computer-readable recording medium include magnetic media such as hard disks, floppy disks, and magnetic tapes, optical media such as CD-ROMs and DVDs, magneto-optical media such as floptical disks, and hardware devices specially configured to store and execute program instructions, such as ROMs, RAMs, and flash memories. Examples of the program instructions include not only machine language code generated by a compiler, but also high-level language code that can be executed by a computer by using an interpreter or the like.

The hardware device described above may be configured to operate as one or a plurality of software modules to perform the operations of the embodiments, and vice versa.

As described above, although the embodiments have been described with reference to the limited drawings, those of ordinary skill in the art may apply various technical modifications and variations based thereon. For example, appropriate results may be achieved even if the described techniques are performed in an order different from the described method, and/or components of the described systems, structures, devices, circuits, and the like are coupled or combined in a form different from the described method, or replaced or substituted by other components or equivalents.

Therefore, other implementations, other embodiments, and equivalents to the claims also fall within the scope of the claims to be described below.

## Claims

1. An electronic device comprising:
at least one processor; and
a memory electrically connected to the at least one processor and storing at least one instruction executed by the processor,
wherein the processor, when the at least one instruction is executed, causes the electronic device to:
receive, from a plurality of detection cameras, a plurality of first images captured with respect to a filming space;
identify a type of at least one object included in the plurality of first images for each set frame;
determine, for each set frame, a position of the at least one object in a three-dimensional coordinate system set with respect to the filming space;
determine a control signal for generating a broadcast video by inputting the type and position of the at least one object into a trained model; and
determine the broadcast video by using at least one second image among a plurality of second images obtained from a plurality of filming cameras, based on the control signal.

2. The electronic device of claim 1, wherein the at least one processor controls the plurality of filming cameras based on the control signal.

3. The electronic device of claim 1, wherein the at least one processor determines data regarding the at least one object based on the type and position of the at least one object.

4. The electronic device of claim 3, wherein the at least one processor determines the broadcast video including the data.

5. The electronic device of claim 1, wherein the at least one processor:
determines a control signal for generating a replay video by inputting the type and position of the at least one object into the model; and
determines the replay video based on a plurality of second images of previous frames obtained from the plurality of filming cameras, according to the control signal for generating the replay video.

6. The electronic device of claim 1, wherein the at least one processor:
processes the broadcast video based on information of a user terminal (200) communicatively connected to the electronic device; and
transmits the processed broadcast video to the user terminal (200).

7. An electronic device comprising:
at least one processor; and
a memory electrically connected to the at least one processor and storing at least one instruction executed by the processor,
wherein the processor, when the at least one instruction is executed, causes the electronic device to:
receive, from a plurality of detection cameras, a plurality of first images captured with respect to a filming space;
identify at least one object included in the plurality of first images for each set frame;
determine, for each set frame, a position of the at least one object in a three-dimensional coordinate system set with respect to the filming space;
identify an event that has occurred in the filming space by inputting the type and position of the at least one object into a trained model;
determine, by using the model, a control signal for generating a broadcast video according to the event; and
determine the broadcast video by using at least one second image among a plurality of second images obtained from a plurality of filming cameras, based on the control signal.

8. The electronic device of claim 7, wherein the at least one processor:
determines data regarding the at least one object based on the type and position of the at least one object; and
determines the broadcast video including the data based on the event.

9. A method of automated broadcasting, the method comprising:
receiving, from a plurality of detection cameras, a plurality of first images captured with respect to a filming space;
identifying at least one object included in the plurality of first images for each set frame;
determining, for each set frame, a position of the at least one object in a three-dimensional coordinate system set with respect to the filming space;
determining a control signal for generating a broadcast video by inputting a type and position of the at least one object into a trained model; and
determining the broadcast video by using at least one second image among a plurality of second images obtained from a plurality of filming cameras, based on the control signal.

10. The method of claim 9, wherein the determining of the broadcast video comprises controlling the plurality of filming cameras based on the control signal.

11. The method of claim 9, further comprising determining data regarding the at least one object based on the type and position of the at least one object.

12. The method of claim 11, wherein the determining of the broadcast video comprises determining the broadcast video including the data.

13. The method of claim 1, wherein the determining of the control signal comprises determining a control signal for generating a replay video by inputting the type and position of the at least one object into the model, and
the determining of the broadcast video comprises determining the replay video based on a plurality of second images of previous frames obtained from the plurality of filming cameras, according to the control signal for generating the replay video.

14. The method of claim 9, further comprising:
processing the broadcast video based on information of a user terminal (200) communicatively connected to the electronic device; and
transmitting the processed broadcast video to the user terminal (200).

15. A computer program stored in a computer-readable recording medium in combination with hardware to execute the method of any one of claims 9 to 14.
